# EUROPEAN PATENT SPECIFICATION

(11) **EP 2 695 554 B1**
(45) Date of publication and mention of the grant of the patent: **06.05.2015**
(21) Application number: 13003960.5
(22) Date of filing: 08.08.2013
(51) Int. Cl.: A47J 31/44, A47J 31/60

(54) **A self-cleaning milk frothing device**
Selbstreinigende Milchaufschäumungsvorrichtung
Dispositif de formation de mousse de lait autonettoyant

(30) Priority: 08.08.2012 CN 201220392528 U
(43) Date of publication of application: 12.02.2014
(73) Proprietor: Tsann Kuen (Zhangzhou) Enterprise Co., Ltd., Fujian (CN)
(72) Inventor: Zhang, Yanxiang, Zhang Zhou, Fujian (CN); Zhong, Weijun, Zhang Zhou, Fujian (CN)
(74) Representative: Verscht, Thomas Kurt Albert

(56) References cited:
- EP-A1- 2 353 473
- WO-A1-2012/010370

## Description

### Field of the invention

The present invention relates to a self-cleaning milk frothing device.

### Background of the invention

An auto milk frothing device is disclosed in the Chinese patent database in August 8th, 2007 with publishing number 200620086981.7. The auto milk frothing device is disposed with a main body, which is disposed with a frothing cavity. Two ends of the frothing cavity are respectively disposed with a steam inlet and a steam outlet, the frothing cavity is disposed with an impeller inside, the side wall of the steam inlet is disposed with a milk inlet. When the high pressure steam is entered from the steam inlet, it generates negative pressure to take in milk, the steam, the air and the milk are entered into the frothing cavity to drive the impeller to rotate and form the milk froth, the milk froth is effused from the steam outlet finally.

However, after the milk froth is made, there is some rest milk in the frothing cavity and the steam outlet, if the rest milk is not discharged in time, it will turn sour, influencing the next usage.

Document EP-A-A-2353473 discloses a device according to the preamble of independent claim 1.

### Summary of the invention

The present invention is provided with a self cleaning milk frothing device, which overcomes the disadvantages of the existing technology. The technical proposal of the present invention to solve the technical problem is as below:
A self-cleaning milk frothing device comprises a frothing mechanism, a milk-suction conduit and a milk-discharge conduit to discharge the rest milk, the frothing mechanism is disposed with a steam conduit to generate negative pressure inside, the milk-suction conduit includes a first flexible tube inserted into the milk, a second flexible tube connected to the frothing mechanism and a three-way pipe connected to the first flexible tube and the second flexible tube, an electromagnetic valve to control the left end of the three-way pipe to connect to the air or separate from the air is further disposed, a controller to control the on-off of the electromagnetic valve is disposed.

In another preferred embodiment, the frothing mechanism is further disposed with a main body with three joints, the first joint of the main body is connected to the steam conduit, the second joint of the main body is connected to the milk-discharge conduit, the milk is imported from the third joint of the main body.

In another preferred embodiment, the frothing mechanism is further disposed with a gas-liquid mixture, one end of the gas-liquid mixture is connected to the second flexible tube, the other end is connected to the third joint of the main body, the gas-liquid mixture is disposed with a suction hole to take in air.

In another preferred embodiment, the frothing mechanism is further disposed with an adjusting mechanism to adjust the milk suction volume, the adjusting mechanism is inserted into the gas-liquid mixture.

In another preferred embodiment, it further disposed with a handle to sleeve and cover the milk-discharge conduit.

Compared to the existing technology, the technical proposal of the present invention has advantages as below:
1. When the frothing milk is made, the controller controls the electromagnetic valve to start up, making the three-way pipe to connect to the air, as the mass of the air is much lighter than that of the milk, the negative pressure can not take in milk but air instead, the suction air is passing through the second flexible tube and the frothing mechanism and then going out of the milk-discharge conduit, so that the suction air can blows the rest milk in the second flexible tube, the frothing mechanism and the milk-discharge conduit out, implementing the cleaning of the second flexible tube, the frothing mechanism and the milk-discharge conduit.
   Besides, the steam of the steam conduit can clean rest milk of the frothing mechanism and the milk-discharge conduit.
2. The controller controls the on-off of the electromagnetic valve automatically, it cleans the milk frothing device automatically by using the air, so that the milk frothing device is easy to operate with simple structure.
3. The gas-liquid mixture is further disposed with a suction hole to take in air, the air from the suction hole is mixed with the milk of the frothing mechanism to enhance the frothing effect.
4. The frothing mechanism is further disposed with an adjusting mechanism to adjust the milk suction volume, user can change the proportion of the milk and the air from the adjusting mechanism to get different size of froth .
5. With the handle sleeved and covered the milk-discharge conduit, it prevents the milk-discharge conduit from scalding human being.

### Brief description of the drawings

The present invention will be further described with the drawings and the embodiments.
Fig.1 illustrates the breakdown structure of a self-cleaning milk frothing device.
Fig.2 illustrates the structure of the milk frothing device of fig. 1 in making frothing milk.
Fig.3 illustrates the structure of the milk frothing device of fig. 1 in self-cleaning.

### Detailed description of the embodiments

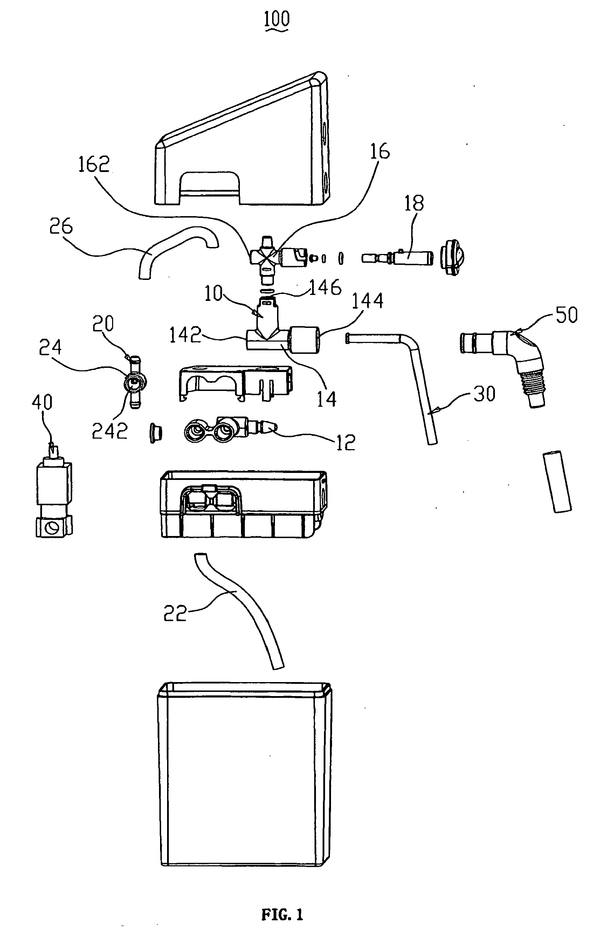

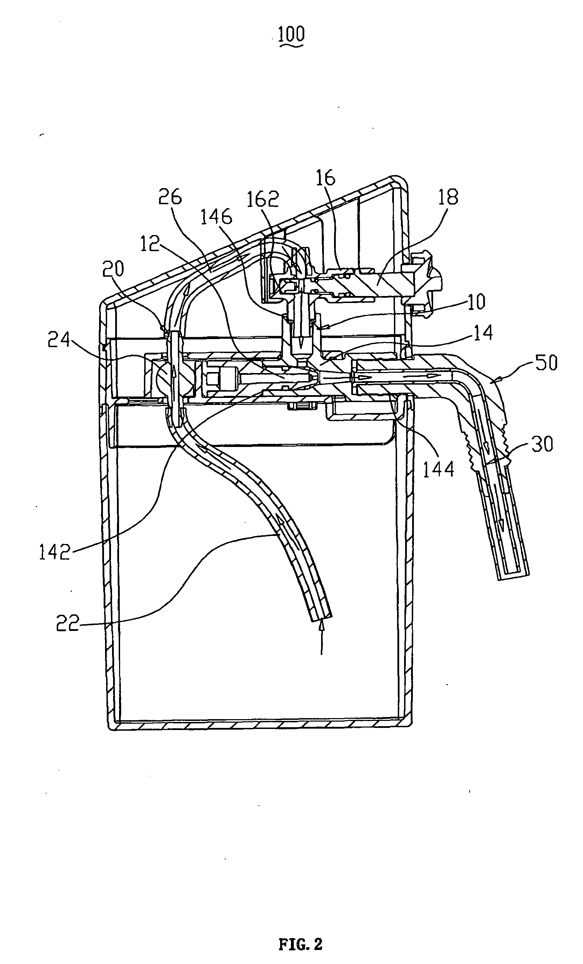

Please refer to fig.1 and fig.2. A self-cleaning milk frothing device 100 is provided to make milk froth, it includes a frothing mechanism 10, a milk-suction conduit 20, a milk-discharge conduit 30, an electromagnetic valve 40, a handle 50 and a controller (not figured out).

The frothing mechanism 10 includes a steam conduit 12, a main body 14, a gas-liquid mixture 16 and an adjusting mechanism 18. The steam conduit 12 is used to blow the high temperature and high pressure steam into the frothing mechanism 10, making negative pressure generated inside the frothing mechanism 10, the negative pressure is used to take in milk or air. The main body 14 is a three-way pipe with three joints, which are a first joint 142, a second joint 144 and a third joint 146. The gas-liquid mixture 16 is a four-way pipe, and it is disposed with a suction hole 162, the suction hole 162 is situated in the left end of the gas-liquid mixture 16. the diameter of the suction hole 162 is relatively small, under the action of the negative pressure, it takes in the external air and makes sure that the milk inside the gas-liquid mixture 16 will not be discharged out through the suction hole 162. The upper end, the lower end and the right end of the gas-liquid mixture 16 are disposed with an outlet. The adjusting mechanism 18 is used to adjust the milk suction volume of the frothing mechanism 10, then to adjust the proportion of the air and the milk.

The steam conduit 12 is inserted into the first joint 142 of the main body; the lower end of the gas-liquid mixture 16 is connected to the third joint 146 of the main body 14; the adjusting mechanism 18 is inserted into the gas-liquid mixture 16 from the right end of the gas-liquid mixture 16.

The milk-suction conduit 20 includes a first flexible tube 22, a three-way pipe 24 and a second flexible tube 26 in order. The first flexible tube 22 is used to insert into the milk. The second flexible tube 26 is connected to the upper end of the gas-liquid mixture 16. The upper end and the lower end of the three-way pipe are respectively connected to the second flexible tube 26 and the first flexible tube 22. the middle portion of the three-way pipe 24 is disposed with a connecting hole 242.

The milk-discharge conduit 30 is connected to the second joint 144 of the main body 14 to discharge the milk after frothing.

The electromagnetic valve 40 is used to control the connecting hole 242 of the three-way pipe to connect to the air or separate from the air.

The handle 50 is used to sleeve and cover the milk-discharge conduit 30.

Refer to fig.2. When making milk froth, the controller controls the electromagnetic valve 40 to turn off, the connecting hole 242 is separated from the air, and the milk-suciton conduit 20 is separated from the external air; the steam conduit 12 blows high temperature and high pressure steam into the main body 14, so that negative pressure is generated inside the main body 14; with the negative pressure, the milk is sucked into the frothing mechanism 10 through the milk-suction conduit 20; after milk froth is made by the frothing mechanism 10, the milk after frothing is blew to the milk-discharge conduit 30 under the action of the steam and then discharged out of the milk-discharge conduit. The flowing path of the milk is as figured in fig.2.

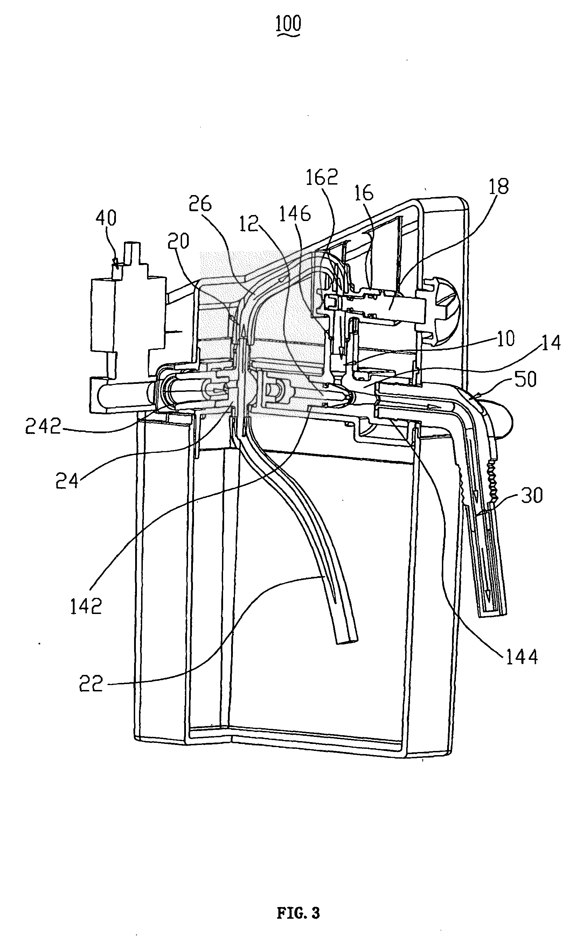

Refer to fig.3. after the milk froth is made, the controller controls the electromagnetic valve 40 to start up, the connecting hole 242 is connected to the air, the milk-suction conduit 20 is connected to the external air; the steam conduit 12 continues to blow high temperature and high pressure steam to the main body 14, so that negative pressure generates inside the main body 14; air in the stmosphere is taken in under the action of the negative pressure (as the mass of the air is much lighter than that of the milk, only air is sucked but not milk by the negative pressure), the air blows the rest milk inside the frothing mechanism 10 and the milk-discharge conduit 30 out when it flows through the frothing mechanism 10 and the milk-discharge conduit 30. The flowing path of the air is as figured in fig.3.

The present invention may be summarized as follows: The present invention is provided with a self-cleaning milk frothing device, which comprises a frothing mechanism, a milk-suction conduit and a milk-discharge conduit to discharge the rest milk, the frothing mechanism is disposed with a steam conduit to generate negative pressure inside, the milk-suction conduit includes a first flexible tube inserted into the milk, a second flexible tube connected to the frothing mechanism and a three-way pipe connected to the first flexible tube and the second flexible tube, an electromagnetic valve to control the left end of the three-way pipe to connect to the air or separate from the air is further disposed, a controller to control the on-off of the electromagnetic valve is disposed. After the frothing milk is made, the controller controls the electromagnetic valve to start up, making the three-way pipe to connect to the air, as the mass of the air is much lighter than that of the milk, the negative pressure can not take in milk but air instead, the suction air is passing through the second flexible tube and the frothing mechanism and then going out of the milk-discharge conduit, so that the suction air can blows the rest milk in the second flexible tube, the frothing mechanism and the milk-discharge conduit out, implementing the cleaning of the second flexible tube, the frothing mechanism and the milk-discharge conduit.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A self-cleaning milk frothing device (100), which comprises a frothing mechanism (10), a milk-suction conduit (20) and a milk-discharge conduit (30) to discharge the rest milk, the frothing mechanism is disposed with a steam conduit (12) to generate negative pressure inside, the milk-suction conduit (12) includes a first flexible tube (22) inserted into the milk and a second flexible tube (26) connected to the frothing mechanism **characterized in that** the milk-suction conduit includes a three-way pipe (24) connected to the first flexible tube and the second flexible tube, an electromagnetic valve (60) to control the left end of the three-way pipe to connect to the air or separate from the air is further disposed, a controller to control the on-off of the electromagnetic valve (60) is disposed.

2. A self-cleaning milk frothing device according to claim 1, wherein the frothing mechanism is further disposed with a main body with three joints, the first joint of the main body is connected to the steam conduit, the second joint of the main body is connected to the milk-discharge conduit, the milk is imported from the third joint of the main body.

3. A self-cleaning milk frothing device according to claim 1 and/or 2, wherein the frothing mechanism is further disposed with a gas-liquid mixture, one end of the gas-liquid mixture is connected to the second flexible tube, the other end is connected to the third joint of the main body, the gas-liquid mixture is disposed with a suction hole to take in air.

4. A self-cleaning milk frothing device according to claim 3, wherein the frothing mechanism is further disposed with an adjusting mechanism to adjust the milk suction volume, the adjusting mechanism is inserted into the gas-liquid mixture.

5. A self-cleaning milk frothing device according to any one or more of claims 1 to 4, which is further disposed with a handle to sleeve and cover the milk-discharge conduit.

## Patentansprüche

1. Selbstreinigende Milchaufschäumungsvorrichtung (100), die einen Aufschäumungsmechanismus (10), einen Milchansaugkanal (20) und einen Milchabgabekanal (30) zum Abgeben der Restmilch aufweist, wobei der Aufschäumungsmechanismus mit einem Dampfkanal (12) eingerichtet ist, um im Inneren einen Unterdruck zu erzeugen, wobei der Milchansaugkanal (12) ein erstes flexibles Rohr (22), das in die Milch cingeführt ist, und ein zweites flexibles Rohr (26), das mit dem Aufschäumungsmechanismus verbunden ist, umfasst, **dadurch gekennzeichnet, dass** der Milchansaugkanal eine Dreiwegerohrleitung (24) umfasst, die mit dem ersten flexiblen Rohr und dem zweiten flexiblen Rohr verbunden ist, wobei ferner ein elektromagnetisches Ventil (60) eingerichtet ist, um das linke Ende der Dreiwegerohrleitung zu steuern, um mit der Luft zu verbinden oder von der Luft zu trennen, und eine Steuerung eingerichtet ist, um das Ein/Aus des elektromagnetischen Ventils (40) zu steuern.

2. Selbstreinigende Milchaufschäumungsvorrichtung nach Anspruch 1, wobei der Aufschäumungsmechanismus ferner mit einem Hauptkörper mit drei Anschlussstücken einrichtet ist, wobei das erste Anschlussstück des Hauptkörpers mit dem Dampfkanal verbunden ist, das zweite Anschlussstück des Hauptkörpers mit dem Milchabgabekanal verbunden ist und die Milch von dem dritten Anschlussstück des Hauptkörpers eingeführt wird.

3. Selbstreinigende Milchaufschäumungsvorrichlung nach Anspruch 1 und/oder 2, wobei der Aufschäumungsmechanismus ferner mit einer Gas-Flüssigkeitsmischung eingerichtet ist, wobei ein Ende der Gas-Flüssigkeitsmischung mit dem zweiten flexiblen Rohr verbunden ist, das andere Ende mit dem dritten Anschlussstück des Hauptkörpers verbunden ist und die Gas-Flüssigkeitsmischung mit einem Ansaugloch eingerichtet ist, um Luft einzusaugen.

4. Selbstreinigende Milchaufschäumungsvorrichtung nach Anspruch 3, wobei der Aufschäumungsmechanismus ferner mit einem Einstellmechanismus eingerichtet ist,
um das Milchansaugvolumen einzustellen, wobei der Einstellmechanismus in die Gas-Flüssigkeitsmischung eingeführt ist.

5. Selbstreinigende Milchaufschäumungsvorrichtung nach einem oder mehrren der Ansprüche 1 bis 4, die ferner mit einem Griff eingerichtet ist, um den Milchabgabekanal zu ummanteln und zu bedecken.

## Revendications

1. Dispositif de formation de mousse de lait autonettoyant (100), qui comprend un mécanisme de formation de mousse (10), un conduit d'aspiration de lait (20) et un conduit d'évacuation de lait (30) pour évacuer le lait restant, le mécanisme de formation de mousse est pourvu d'un conduit de vapeur (12) pour produire, à l'intérieur, une pression négative, et le conduit d'aspiration de lait (12) comprend un premier tube flexible (22) introduit dans le lait, et un second tube flexible (26) relié au mécanisme de formation de mousse, **caractérisé en ce que** le conduit d'aspiration de lait comprend un tuyau à trois voies (24) relié au premier tube flexible et au second tube flexible, une électrovanne (40) est prévue pour commander l'extrémité gauche du tuyau à trois voies afin de la relier à l'air ou de la séparer de l'air, et un dispositif de commande est prévu pour commander la marche-arrêt de l'électrovanne (40).

2. Dispositif de formation de mousse de lait autonettoyant selon la revendication 1, dans lequel le mécanisme de formation de mousse est également pourvu d'un corps principal avec trois joints, le premier joint du corps principal est relié au conduit de vapeur, le deuxième joint du corps principal est relié au conduit d'évacuation de lait, et le lait est amené à partir du troisième joint du corps principal.

3. Dispositif de formation de mousse de lait autonettoyant selon la revendication 1 et/ou 2, dans lequel le mécanisme de formation de mousse est également pourvu d'un mélange gaz-liquide, une extrémité du mélange gaz-liquide est reliée au second tube flexible, que l'autre extrémité est reliée au troisième joint du corps principal, et le mélange gaz-liquide est pourvu d'un trou d'aspiration pour aspirer de l'air.

4. Dispositif de formation de mousse de lait autonettoyant selon la revendication 3, dans lequel le mécanisme de formation de mousse est également pourvu d'un mécanisme de réglage pour régler le volume d'aspiration de lait, et le mécanisme de réglage est introduit dans le mélange gaz-liquide.

5. Dispositif de formation de mousse de lait autonettoyant selon au moins l'une quelconque des revendications 1 à 4, qui est également pourvu d'une poignée pour enrober et couvrir le conduit d'évacuation de lait.
